# EUROPEAN PATENT APPLICATION

(11) **EP 4 748 554 A1**
(43) Date of publication of application: **27.05.2026**
(21) Application number: 24214183.6
(22) Date of filing: 20.11.2024
(51) Int. Cl.: B29C 64/106, B29C 64/209, B29C 64/227, B29C 64/336, B29C 64/343, B29C 64/35, B33Y 10/00, B33Y 30/00, B33Y 40/00, B33Y 70/00

(54) **MULTI-MATERIAL EXTRUSION PRINTING**

(71) Applicant: Nederlandse Organisatie voor toegepast- natuurwetenschappelijk onderzoek TNO, 2595 DA 's-Gravenhage (NL)
(72) Inventor: AULBERS, Antonius Paulus, 2595 DA's-Gravenhage (NL); RiJFERS, Andries, 2595 DA's-Gravenhage (NL)
(74) Representative: V.O.

(57) **Abstract**

Printing head (1) for 3D semi-solid extrusion printing, comprising:
- a printing head housing (5) comprising a nozzle (4);
- a plurality of upstream channels (2) arranged to transport semi-solid material from a source (11) towards a corresponding progression actuator (7) during use;
- a plurality of progression actuators (7) arranged to drive semi-solid material during use;
- a multi-channel body (8) that is releasably provided in the printing head housing
- wherein the multi-channel body is at least tapered towards the nozzle;
- wherein the printing head further comprises a plurality of ducts (9) formed by the multi-channel body and the printing head housing;
- wherein each upstream channel of the plurality of upstream channels is in fluid connection with the nozzle via a corresponding transport channel (3) arranged to transport a semi-solid material during use,
- wherein each transport channel comprises a corresponding progression actuator and a corresponding duct such that, during use, semi-solid material present in each upstream channel is transported in a corresponding transport channel towards the nozzle.

## Description

The invention relates to a printing head for 3D semi-solid extrusion printing, a 3D semi-solid extrusion printing device comprising said printing head and a method of cleaning a printing head.

3D printing is a process of creating a three-dimensional object by depositing material layer by layer based on a, often digital, model. 3D printing is used across a wide range of industries for prototyping or manufacturing purposes. It offers flexibility, speed and customization that is often not possible with traditional manufacturing methods such as injection molding.

A special type of 3D printing is called 3D semi-solid extrusion printing. This process involves forcing (extruding) material through a nozzle and create the desired shape by providing layer by layer, gradually building up the final object. 3D semi-solid extrusion printing is a cost-effective type of 3D printing and is therefore accessible for a broad range of users. Additionally, a large variety of materials can be used in a 3D semi-solid extrusion printer, such as plastics, thermoplastics, composites, pharmaceutical components and food grade material.

Commonly, a 3D semi-solid extrusion printer is only capable of handling a single material at a time. Multi-material printing, i.e. printing an object comprising of multiple materials in a single printing session, may be of interest when creating more complex objects such as food or objects that e.g. require very well-defined gradients. In order to facilitate multi-material printing, a 3D semi-solid extrusion printer is usually extended by having a tool changer which switches out the syringes that provide the material to the printing head. Alternatively, physically separated printing heads for each material are provided.

A drawback of such systems is that it may take a significant amount of time for the syringe to be exchanged. Furthermore, it is not possible to have in situ-mixing of materials and the printing quality is extremely sensitive to variation in the height along the z-axis of each separated printing head of the physically separated printing heads. Specifically, the distance between the printing platform and each separated printing head, i.e. the height along the z-axis, needs to be the same. In order to address these issues, it has been proposed to provide a manifold that combines the feed from multiple sources into a single printing head.

A downside of the commonly available manifold systems is that they are relatively large, are difficult to clean and not capable of providing an accurate amount of material during 3D-printing. Cleaning of the 3D semi-solid extrusion printer is very important in order to maintain operational uptime, e.g. preventing the system from clogging, and may be very important if the 3D semi-solid extrusion printer is used in fields with high hygienic requirements, such as the food industry or the pharmaceutical industry.

The invention aims to counteract the above disadvantages, preferably while retaining the advantages. More specifically, the invention aims to provide for a relative compact printing head that is relatively easy to clean while still being able to provide an accurate amount of material when printing.

Therefore, the invention provides for a printing head for 3D semi-solid extrusion printing, in particular the printing head for 3D semi-solid extrusion printing according to claim 1, comprising a printing head housing comprising a nozzle, a plurality of upstream channels arranged to transport semi-solid material from a source towards a corresponding progression actuator during use, a plurality of progression actuators arranged to drive semi-solid material during use and a multi-channel body that is releasably provided in the printing head housing. The nozzle can be either an integrally formed component of the printing head housing or a removeable components. The nozzle has an opening through which semi-solid material exits the printing head during use, e.g. when printing an object. The housing of the printing head and / or the upstream channels can be made from a plastic material, a composite material or a metal, preferably stainless steel. Preferably, all components of the printing head that come in to direct contact with the semi-solid material, the printing head housing and / or the upstream channels, are made of a material of food-grade quality that does not deteriorate due to exposure to the semi-solid material used during printing and may be easily cleaned. The plurality of upstream channels is arranged to be releasably connected to a source of semi-solid materials such that they form a fluid connection between the source of the semi-solid material and a corresponding progression actuator. Each upstream channel of the plurality of upstream channels are provided such that the materials present in various upstream channels cannot mix, i.e. they remain separated. The semi-solid materials can be driven towards the progression actuators, e.g. by a positive gas pressure or by applying a mechanical force directly to the source of the semi-solid material. The progression actuators then act as a metering system, preventing passage of the semi-solid material when not actuated. When the progression actuators are actuated semi-solid material may pass into ducts. Since the progression actuators can be accurately actuated and measured, it is possible to accurately provide semi-solid material towards the nozzle.

The ducts of the printing head, formed partially by the multi-channel body, can be easily cleaned since it is possible to remove the multi-channel body from the printing head. Doing so exposes the ducts for access, facilitating access for cleaning and / or maintenance. The multi-channel body itself may be cleaned elsewhere, for example in a dishwasher. The multi-channel body is at least tapered towards the nozzle of the printing head housing. The printing head may further comprise a plurality of ducts formed by the multi-channel body and the printing head housing. Additionally or alternatively, the duct may be formed by the multi-channel body and an auxiliary component provided in the printing head housing, e.g. an insert. Each upstream channel of the plurality of upstream channels is in fluid connection with the nozzle via a corresponding transport channel arranged to transport a semi-solid material during use. Each transport channel comprises a corresponding progression actuator and a corresponding duct such that, during use, semi-solid material present in each upstream channel is transported in a corresponding transport channel towards the nozzle.

In the context of the invention, semi-solid or quasi-solid material should be understood as a material having a matter of state which is between a solid and a liquid. In this state, the material may exhibit properties of both a solid and a liquid. For example, a semi-solid material may have the ability to support its own weight and hold its shape while simultaneously being conforming on shape when a pressure is applied to the material and flowing once a pressure is applied. Examples of semi-solid materials are cosmetic creams, gels and food products such as peanut butter and jelly.

At least two progression actuators of the plurality of progression actuators can be provided in a first plane perpendicular to an axis that is aligned with the nozzle, specifically concentrically aligned. The at least two progression actuators can be distributed around the axis, preferably evenly distributed. Providing at least two progression actuators, such as for example all progression actuators, on a plane perpendicular with the nozzle, i.e. horizontal during use of the printing head, allows for a compact design as the amount of progression actuators in the plane is maximized. As a result, a relatively compact printing head can be facilitated.

At least one of a motor and a gear pump of at least one progression actuator of the plurality of progression actuators can be provided in a further plane perpendicular to a further axis that is aligned, preferably concentrically aligned, with the nozzle. The further plane can be staggered relative to the first plane in a longitudinal direction of the axis. Having at least a part the progression actuators, i.e. the motor, the gear pump or both, distributed over multiple planes while still ensuring that they are compactly provided on each plane, may further facilitate a relatively compact printing head. A trade-off between the height of the printing head, i.e. the number of planes, can be made versus the circumference of the printing head. This allows the skilled person to design a printing head with the optimal shape for the envisioned 3D semi-solid extrusion printing application.

Each duct can be partially formed by a recess provided on an outer surface of the multi-channel body. Optionally, the duct may further be formed by a wall section of an inner surface of the printing head housing such that the wall section of the inner surface covers the recess. Additionally or alternatively, an insert may be provided in the printing head housing, wherein said insert has a wall section that covers the recess. Said insert may conveniently be removed from the printing head housing, further facilitating ease of cleaning. In order to further facilitate cleaning of the printing head, the multi-channel body may comprise a recess for each duct such that the surface of the multi-channel body can stay relatively smooth. Since the multi-channel body can be removed, and cleaned elsewhere, the recess may be more conveniently cleaned. The relatively smooth surface of the printing head housing, which is less easy to clean at a remote location or which may be less accessible, can be relatively easily cleaned as there are no cavities or cracks in which semi-solid material may get stuck. In the context of the invention, the recess of the duct should be understood as a shape that allows the forming of a closed duct once combined with the surface of the printing housing head. Such shape could be a single, curved wall, a V-shape made by two wall sections, a cubic shape defined by three wall sections etc. Preferably, a shape is used that has less acute angles between the wall sections in the multi-channel body, e.g. a single curved wall, in order to improve accessibility during cleaning of said multi-channel body.

At least two ducts of the plurality of ducts converge towards the nozzle, preferably such that the there is a relatively short path the semi-solid material needs to traverse once leaving the duct to the nozzle. This may be advantageous if mixing of the semi-solid material near the nozzle is not preferred.

At least one progression actuator of the plurality of progression actuators can comprise a gear pump and a motor, e.g. a stepper motor, arranged to drive the gear pump. The gear pump can preferably comprise at least two gears in a substantially horizontal plane. Gear pumps are a known pump system able to accurately measure the amount of semi-solid material that would pass through the gears of the gear pump once actuated. When using gear pumps as a progression actuator, the semi-solid material should have a high enough viscosity in order to reduce the possibility of the semi-solid material passing through the gear pumps when they are not actuated. The gear pumps can be provided in a, during use, horizontal plane to further reduce this possibility. Alternatively, the gears of the gear pumps can be provided in a vertical plane. This may be of interest if the gear pumps need to provide a higher amount of force and the semi-solid material is viscous enough that it doesn't seep through the gears of the gear pump.

The multi-channel body can have an axis around which the multi-channel body is rotational symmetric and wherein said multi-channel body axis can align with the nozzle. Preferably, the axis of the multi-channel body can be concentrically aligned with the nozzle.

An optional mixing chamber with a predetermined volume can be provided in the printing head house between the nozzle and the multi-channel body. The mixing chamber may be a space defined by the printing head housing and the multi-channel body. If mixing of the semi-solid materials is preferred, the semi-solid materials may be provided to the mixing chamber before being pushed out via the nozzle. In order to facilitate better mixing of semi-solid materials in the mixing chamber active mixing equipment, e.g. an actuated mixer, and / or passive mixing equipment, e.g. fins provided on the wall of the mixing chamber, may be provided.

The nozzle can be releasably connected to the printing head housing and / or can have an adjustable opening diameter. Being able to adjust the diameter of the opening of the nozzle may facilitate better control over the printing projects. For example, a smaller nozzle opening may be preferable in case a very small object needs to be printed. This may be facilitated by a nozzle either having an adjustable opening diameter or by a nozzle that can be exchanged for a nozzle having a different opening diameter.

In a second aspect of the invention, there is provided for a 3D-extrusion printing device comprising a printing head as previously disclosed. The printing device further comprises a plurality of sources of semi-solid material and a plurality of pumps arranged to drive the semi-solid material from the source to the printing head. Each source is in fluid connection with a corresponding upstream channel such that, during use, semi-solid material present in each source is transported in a corresponding transport channel towards the nozzle using a corresponding pump. A source can be any container or supply point. For example, the source can be a holder comprising an exchangeable syringe and a pressure connection. The syringe can comprise semi-solid material and may have a piston that forms an air-tight connection with the sidewall of the syringe. By pressurizing the holder, the piston may be depressed such that the semi-solid material present in the corresponding syringe is driven to the printing head. Providing an air-tight connection between the piston and the sidewall of the syringe may prevent pressurized gas, e.g. pressurized air, from entering the syringe. By preventing pressurized gas from entering the syringe, it may be prevented that the pressurized gas is driven through the semi-solid material, towards the printing head, forming a path through the semi-solid material. Once such a path is formed, it may be challenging to drive the remaining semi-solid material from the syringe to the printing head. In addition, preventing mixing of pressurized gas and the semi-solid material may be required to ensure food safety standards.

At least one of the semi-solids provided is a semi-solid used for 3D-printing a food or a product for pharmaceutical use.

In a third aspect of the invention, there is provided for a method of cleaning a printing head such as the printing head described above. The method comprises the steps of:
- removing a multi-channel body from a printing head housing;
- cleaning ducts of a multi-channel body; and
- cleaning a nozzle provided on the printing head housing.

Further advantageous aspects of the invention are set out in the description and appended claims.

The technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Fig. 1 shows an isometric side view of a part of a 3D-extrusion printing device;
Fig. 2 shows an exploded view of an embodiment of a printing head for 3D semi-solid extrusion printing;
Fig. 3A shows a schematic side view of an embodiment of a printing head for 3D semi-solid extrusion printing; and
Fig. 3B shows a schematic top view of an embodiment of a printing head for 3D semi-solid extrusion printing.

It is noted that the figures are only schematic representations that are given by way of non-limited examples. In the figures, the same or corresponding parts are designated with the same reference numerals.

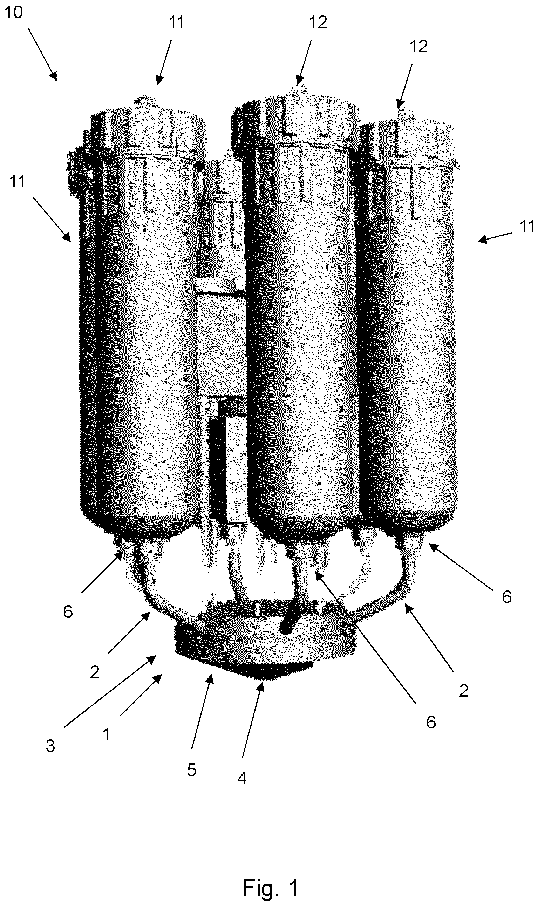

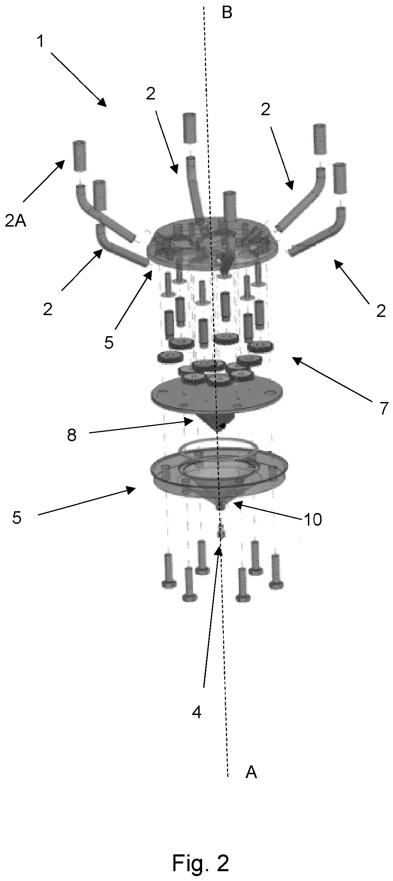

Referring to Fig. 1 and Fig. 2, an example of a part of a 3D-extrusion printing device 10 is shown. The device comprises a printing head 1, a plurality of sources 11 having semi-solid material and a plurality of positive gas pressure connections 12 arranged to drive the semi-solid material from each of the sources 11 to the printing head 1 using a pressure source (not depicted). The sources 11 are, in the shown example, containers that are releasably connected to the printing head 1. The containers 11 are connected via bolts 6, ensuring a liquid-tight connection while simultaneously ensuring easy removal and replacement of containers 11. Inside the containers 11, a semi-solid material is present, for example a semi-solid material used for printing food objects. Each source 11 is in fluid connection with a corresponding upstream channel 2 such that, during use, the semi-solid material present in each source 11 is transported in a corresponding transport channel 3 towards the nozzle 4, using a corresponding positive gas pressure connection 12 and pressure source. Each source 11, or tube, has a corresponding positive gas pressure connection 12 arranged to drive the semi-solid material out of the tube using a pressure source, into the printing head 1. In the shown example, this is achieved by providing a downward motion of a pushing arrangement (not shown) inside each tube. However, the person skilled in the art knows that other types of pumps 12 and devices exists that are suitable for causing a flow of semi-solid material from the source 11 to a corresponding upstream channel 2 of the printing head 1.

The printing head 1 comprises a printing head housing 5, which comprises the nozzle 4. The nozzle 4 is releasably connected to the printing head housing, such that it can be easily cleaned and / or replaced when a different nozzle is preferred, e.g. a nozzle 4 with a different opening diameter. In addition, a plurality of upstream channels 2 are provided. The upstream channels 2 are arranged to transport the semi-solid material from the source 11 towards a corresponding progression actuator 7 during use. The progression actuators 7 are arranged to drive semi-solid material during use.

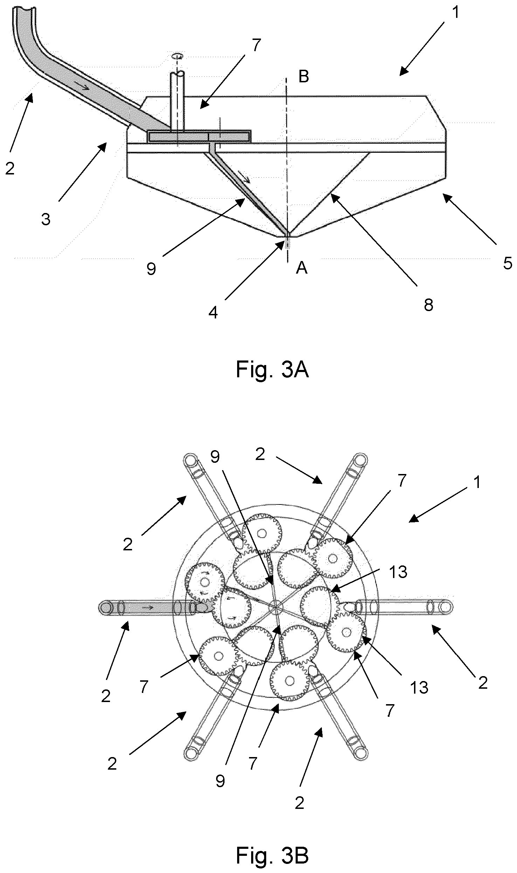

As shown in the examples depicted in Figs. 2, 3A and 3B, a multi-channel body 8 is provided that is releasably provided in the printing head housing 5 and is tapered towards the nozzle 4. The multi-channel body 8 has an axis B around which the multi-channel body 8 is rotational symmetric. The axis B of the multi-channel body 8 is concentrically aligned with the nozzle 4. In the shown example, the multi-channel body 8 is provided as a solid cone, in which, on the outer surface of the cone, a plurality of cavities is provided. Inside the printing head 1, when the multi-channel body 8 is present in the printing head housing 5, a plurality of ducts 9 is formed by the cavities on the outer surface of the multi-channel body 8 and the relatively smooth inner surface of the printing head housing 5. It shall be clear to the person skilled in the art that ducts also may be formed by providing a recess on the inner surface of the printing head housing 5, while having a smooth and continuous outer surface of the multi-channel body 8. Alternatively, both surfaces may have cavities that form the ducts once combined.

Each upstream channel 2 is in fluid connection with the nozzle 4 via a corresponding transport channel 3 arranged to transport a semi-solid material during use. In the shown example, the upstream channel 2 is formed by two components. The diameter of both components remains constant along its length, i.e. the width of the upstream channel 2 remains the same. Depending on the source 11 that has to be connected to the upstream channel 2, the width of the connection element 2A may vary. For example, if a source is used that has a relatively broad syringe, the connection element 2A may have a broader opening towards the end of the connection element 2A to which the syringe is connected. The connection element 2A is provided such that it can be releasably connected to the rest of the upstream channel 2, e.g. using a screw connection, such that the connection element 2A can be adjusted when a different source 11 is provided.

Each transport channel 3 comprises a corresponding progression actuator 7 and a corresponding duct such that, during use, the semi-solid material present in each upstream channel 2 is transported in a corresponding transport channel 3 towards the nozzle 4. The progression actuators 7 are provided in a plane perpendicular to an axis A that, in the shown example, is concentrically aligned with the nozzle 4. The progression actuators 7 are evenly distributed around the axis A. In the shown example, the progression actuators comprise gear pumps 7 and a motor (not depicted) arranged to drive a corresponding gear pump 7. Each gear pump 7 has two gears 13 that are provided in a horizontal plane during use. The gear pumps 7 allow for accurate control, and therefore also measurement, of the semi-solid material provided by the source 11 towards the nozzle 4.

In the shown example, a mixing chamber 10 with a predetermined volume is provided in the printing head housing between the nozzle 4 and the multi-channel body 8. The mixing chamber 10 is a fixed volume, allowing the semi-solid material from multiple ducts to come in to contact with each other, and mix, before leaving the nozzle 4. A mixing chamber 10 may be formed as an integral part of the printing head housing 5, or may be provided as a releasable connected, e.g. via screw connection, separate component. This allows for the predetermined volume to be adjusted by providing a different component between the nozzle 4 and the multi-channel body 8. Additionally, or alternatively, the mixing chamber 10 may be adjustable in volume by providing inserts that are able to manipulate the available volume for mixing.

At least one of the semi-solids provided is a semi-solid used for 3D-printing food or a product for pharmaceutical use. This may be achieved by using, for example, the printing head 1 as discussed above. Two sources 11, e.g. two containers 11, may be provided and releasably attached to a corresponding upstream channel 2. The semi-solid material present in the containers 11 may then, via positive gas pressure connections 12, be driven in the upstream channels 2. The flow of semi-solid material will be stopped by the progression actuators 7, e.g. the gear pumps. As an example, first a semi-solid material from a first tube 11 is needed to print an object. The gear pump 7 that is in fluid communication with the first tube 11 can be actuated, such that the exact amount of material needed is dispensed. The semi-solid material present in the first tube is thus transported via a corresponding duct 9, past the multi-channel body 8, out of the opening of nozzle 4. Once sufficient semi-solid material has been dispensed from the first tube 11, the corresponding gear pump 7 stops rotating thereby stopping the flow of semi-solid material past the gear pump 7. This process can be repeated for a second semi-solid material, present in the second tube 11. Alternatively, both materials can be dispensed simultaneously. The first and second semi-solid material in that case will come in to contact with each other at the bottom of the multi-channel body 8, near the opening of the nozzle 4. If a mixing chamber 10 is present, the first and second semi-solid material may mix before leaving the nozzle 4.

Figs. 3A and 3B show schematic cross-sectional views of an example of a printing head 1. In Fig. 3A a simplified printing head 1 is shown, having a single upstream channel 2, progression actuator 7 and duct 9. From this example, it can be clearly seen how the semi-solid material, shown in grey, is transported through the transport channel 3, i.e. from the upstream channel 2 towards the nozzle 4. Additionally, it is shown as an example, that the printing head housing 5 and multi-channel body 8 are rotational symmetric. The printing head housing has a rotational symmetric axis A, the multi-channel body 8 has a rotational symmetric axis B. In the shown example, both axis A,B, are concentric and overlap. In other words, both rotational symmetric axis A,B, are the same rotational symmetric axis. Said rotational symmetric axis A,B are further concentric with the nozzle 4. The duct 9 converges towards the rotational symmetric axis A,B. In an example in which multiple transport channels 3 are provided, it follows that the ducts 9 converge towards a single point, close to the nozzle 4. In Fig. 3B six upstream channels 2, progression actuators 7 and ducts 9 are shown in a top cross-sectional view of an example of a printing head 1. It can be seen that by providing the progression actuators 7 in a plane and evenly distributed around the rotational symmetric axis A, B a compact design may be obtained.

Many variations will be apparent to the skilled person in the art. Such variations are understood to be comprised within the scope of the invention as defined in the appended claims. For example, it is clear to the skilled person that different geometric shapes of the multi-channel body and / or the printing head housing may be obtained. Furthermore, different types of pumps may be used to drive the semi-solid material from the source towards the nozzle, and different types of known progression actuators may be used to control the flow of semi-solid material towards the nozzle.

## Claims

1. Printing head for 3D semi-solid extrusion printing, comprising:
- a printing head housing comprising a nozzle;
- a plurality of upstream channels arranged to transport semi-solid material from a source towards a corresponding progression actuator during use;
- a plurality of progression actuators arranged to drive the semi-solid material during use;
- a multi-channel body that is releasably provided in the printing head housing
- wherein the multi-channel body is at least tapered towards the nozzle;
- wherein the printing head further comprises a plurality of ducts partially formed by the multi-channel body;
- wherein each upstream channel of the plurality of upstream channels is in fluid connection with the nozzle via a corresponding transport channel arranged to transport a semi-solid material during use,
- wherein each transport channel comprises a corresponding progression actuator and a corresponding duct such that, during use, semi-solid material present in each upstream channel is transported in a corresponding transport channel towards the nozzle.

2. Printing head according to claim 1, wherein at least two progression actuators of the plurality of progression actuators are provided in a first plane perpendicular to an axis that is aligned, preferably concentrically aligned, with the nozzle, and wherein the at least two progression actuators are distributed around said axis.

3. Printing head according to claim 1 or 2, wherein at least one progression actuator of the plurality of progression actuators comprises a gear pump and a motor arranged to drive the gear pump, wherein the gear pump preferably comprises at least two gears provided in a substantial horizontal plane.

4. Printing head according to claim 3, wherein a at least one of a motor and a gear pump of at least one progression actuator of the plurality of progression actuators is provided in a further plane perpendicular to a further axis that is aligned, preferably concentrically aligned, with the nozzle and wherein said further plane is preferably staggered relative to the first plane in a longitudinal direction of the axis.

5. Printing head according to any of the preceding claims, wherein each duct is partially formed by a recess provided on an outer surface of the multi-channel body.

6. Printing head according to any of the preceding claims, wherein at least two ducts of the plurality of ducts converge towards the nozzle.

7. Printing head according to any of the preceding claims, wherein the multi-channel body has an axis around which the multi-channel body is rotational symmetric and wherein said multi-channel body axis is aligned, preferably concentrically aligned, with the nozzle.

8. Printing head according to any of the preceding claims, wherein a mixing chamber with a predetermined volume is provided in the printing head housing between the nozzle and the multi-channel body.

9. Printing head according to any of the preceding claims, wherein the nozzle is releasably connected to the printing head housing.

10. Printing head according to any of the preceding claims, wherein the nozzle has an adjustable opening diameter.

11. 3D-extrusion printing device comprising the printing head according to any of the preceding claims, a plurality of sources having semi-solid material and a plurality of pumps arranged to drive the semi-solid material from the source to the printing head, wherein each source is in fluid connection with a corresponding upstream channel such that, during use, semi-solid material present in each source is transported in a corresponding transport channel towards the nozzle using a corresponding pump.

12. 3D-extrusion printing device according to claim 11, wherein at least one of the semi-solid materials provided is a semi-solid material used for 3D-printing a food or a product for pharmaceutical use.

13. Method of cleaning a printing head, preferably the printing head according to any of the claims 1-10, or a 3D-extrusion printing device, preferably the device according to any of the claims 11 or 12, comprising the steps of:
- removing a multi-channel body from a printing head housing;
- cleaning ducts of a multi-channel body; and
- cleaning a nozzle provided on the printing head housing.
